# EUROPEAN PATENT APPLICATION

(11) **EP 4 708 468 A1**
(43) Date of publication of application: **11.03.2026**
(21) Application number: 24832402.2
(22) Date of filing: 26.06.2024
(51) Int. Cl.: H01M 50/103, H01M 50/342, H01M 50/502, H01M 50/627, H01M 50/126, B32B 15/08, B32B 15/085

(54) **SECONDARY BATTERY**

(30) Priority: 30.06.2023 KR 20230084788
(71) Applicant: LG Energy Solution, Ltd., Seoul 07335 (KR)
(72) Inventor: YOON, Doo Han, Daejeon 34122 (KR); LEE, Jin Kyu, Daejeon 34122 (KR); HWANG, Won Pill, Daejeon 34122 (KR)
(74) Representative: Plasseraud IP
(86) International application number: PCT/KR2024/008816
(87) International publication number: WO 2025/005624

(57) **Abstract**

A secondary battery includes an electrode assembly including a plurality of unit batteries stacked in a first direction and having electrode leads on opposing ends in a second direction perpendicular to the first direction; a multifunctional terminal block (MTB) included on the opposing ends of the electrode assembly; and a laminate sheet coupled to a side surface of the stack-type electrode assembly, wherein the MTB includes a fused resin layer on a side surface thereof.

## Description

### [Cross-Reference to Related Applications]

The present application claims priority from Korean Patent Application No. 10-2023-0084788, filed on June 30, 2023, all of which are incorporated herein by reference.

### [Technical Field]

The present disclosure relates to a secondary battery, and more particularly to a secondary battery having improved adhesion between a flexible laminate sheet and an MTB, thereby improving product durability and safety.

### [Background Art]

Unlike primary batteries, secondary batteries can be charged and discharged many times. Secondary batteries are widely used as an energy source for various wireless devices such as handsets, laptops, and wireless vacuum cleaners. Recently, as the manufacturing cost per unit capacity of secondary batteries has decreased dramatically because of improved energy density and economies of scale, and as the cruising distance of battery electric vehicles (BEVs) has increased to an equivalent level to that of fuel vehicles, the major use of secondary batteries has shifted from mobile devices to mobility.

Meanwhile, recently, the demand for large-capacity battery packs applied to electric vehicles has been increasing. Battery packs mounted in vehicles are required to have large capacity as well as improved safety.

### [Summary]

### [Technical Problem]

The present disclosure is directed to a secondary battery with improved adhesion between a flexible laminate sheet and an MTB, resulting in improved product durability and safety.

### [Technical Solution]

The present disclosure solves the above technical problem by providing a secondary battery comprising: a stack-type electrode assembly comprising a plurality of unit batteries stacked in a first direction and having electrode leads on both *(e.g.,* opposing) ends in a second direction perpendicular to the first direction; a multifunctional terminal block (MTB) included on both (e.g., opposing) ends of the stack-type electrode assembly; and a laminate sheet wrapping the side surface of the stack-type electrode assembly, wherein the MTB includes a fused resin layer on the side surface.

In some aspects, the laminate sheet may overlap at least partially with the side surface of the MTB, and the laminate sheet may be fused with the fused resin layer.

In some aspects, the laminate sheet includes a metal layer having flexibility; an inner resin layer included on one side (*e.g.,* a first side) of the metal layer; and an outer resin layer included on the other side (*e.g.,* a second side opposite the first side) of the metal layer, wherein the inner resin layer may include casted polypropylene (CPP).

In some aspects, the fused resin layer may be fused to the inner resin layer.

In some aspects, the fused resin layer may include a polypropylene resin.

In some aspects, the fused resin layer may include an extension part extending from an end of the laminate sheet along the side surface of the MTB.

In some aspects, the side surface of the MTB may be at least partially roughened.

In some aspects, the fused resin layer may coat a roughened portion of the MTB.

In some aspects, the side surface of the MTB may be roughened by surface etching.

In some aspects, the MTB may include an electrode terminal part electrically connected or coupled to electrode leads of the stack-type electrode assembly; and a rupture disk that ruptures when the internal pressure is increased to release gas.

In some aspects, the MTB may further include a busbar electrically connecting the electrode leads of the stack-type electrode assembly with the electrode terminal part.

Another aspect of the present disclosure includes a secondary battery comprising: a stack-type electrode assembly comprising a plurality of unit batteries stacked in a first direction and having electrode leads on an end extending in a second direction perpendicular to the first direction; a multifunctional terminal block (MTB) coupled to the electrode leads of the stack-type electrode assembly and including an electrode terminal part and a busbar; and a laminate sheet wrapping the stack-type electrode assembly with the MTB, wherein the side surface of the MTB is roughened.

In some aspects, the roughened side surface of the MTB may be at least partially coated by a fused resin layer.

In some aspects, the laminate sheet may include a metal layer having flexibility; an inner resin layer included on one side (*e.g.,* a first side) of the metal layer; and an outer resin layer included on the other side (*e.g.,* a second side opposite the first side) of the metal layer, wherein the outer resin layer is fused with the fused resin layer.

In some aspects, the fused resin layer may include an extension part extending from an end of the laminate sheet along the side surface of the MTB.

### [Advantageous Effects]

The secondary battery according to aspects of the present disclosure can improve the adhesion between the flexible laminate sheet and the MTB, thereby improving product durability and safety.

However, the technical effects that can be obtained in exemplary aspects of the present disclosure is not limited to the above-described effects, and other effects not mentioned can be clearly understood by a person skilled in the art from the description of the disclosure described below. In other words, unintended effects of implementing the exemplary aspects of the present disclosure may also be derived from the exemplary aspects of the present disclosure by a person skilled in the art.

### [Brief Description of the Drawings]

FIG. 1 is a perspective view of a part of a secondary battery according to a first aspect of the present disclosure.
FIG. 2 is a partial perspective view of an enlarged portion of the secondary battery of FIG. 1.
FIG. 3 is a schematic perspective view illustrating the removal of a laminate sheet from the secondary battery of FIG. 1.
FIG. 4 is a schematic diagram illustrating a cross section of a first MTB cut in a plane passing through an electrode terminal part and perpendicular to a third direction.
FIG. 5 is a partial exploded perspective view illustrating a coupling method of laminate sheets of a secondary battery according to the first aspect of the present disclosure.
FIG. 6 is a partial cross-sectional view of a laminate sheet according to the first aspect of the present disclosure.
FIG. 7 is a cross-sectional view illustrating a part of a cross section of a first MTB and a laminate sheet cut along the lines VII-VII' of FIG. 5 according to the first aspect of the present disclosure.
FIG. 8 is a cross-sectional view illustrating an important part of a section in which a first MTB and a laminate sheet cut along the lines VII-VII' of FIG. 5 according to another aspect of the present disclosure.
FIGS. 9 to 11 are schematic diagrams illustrating important parts of an outer side surface of a first MTB according to aspects of the present disclosure.
FIG. 12a is a perspective view illustrating an important part of a secondary battery according to an aspect of the present disclosure.
FIG. 12b is a partial perspective view illustrating an enlarged portion of the secondary battery of FIG. 12a.
FIG. 13 is a side view of a secondary battery according to another aspect of the present disclosure.

### [Detailed Description]

Hereinafter, aspects of the present disclosure will be described in detail with reference to the accompanying drawings. However, aspects of the present disclosure concept may be modified in various different forms, and it should not be interpreted that the scope of the present disclosure concept is limited by the aspects described below. It is preferred that the aspects of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from another component. For example, a first component may be named a second component, and vice versa, a second component may be named a first component, without departing from the scope of the present disclosure concept.

The terms used in the present description are used merely to explain specific aspects and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some aspects are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, aspects of the present disclosure should not be construed as limited to the specific forms of the areas shown herein, and should include, for example, variations in form resulting from manufacturing processes. All terms "and/or" used herein are included each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (First aspect)

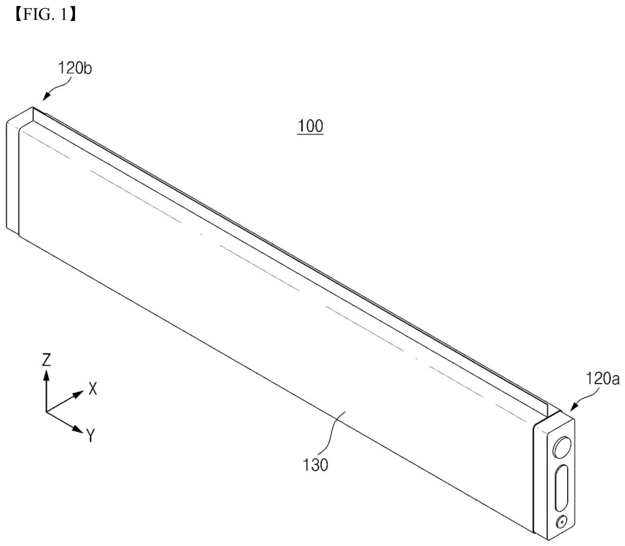

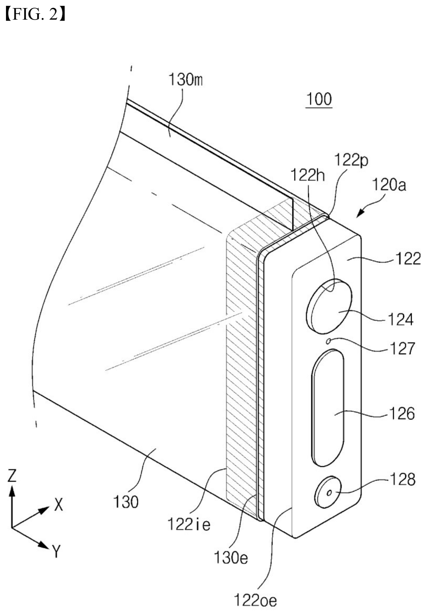

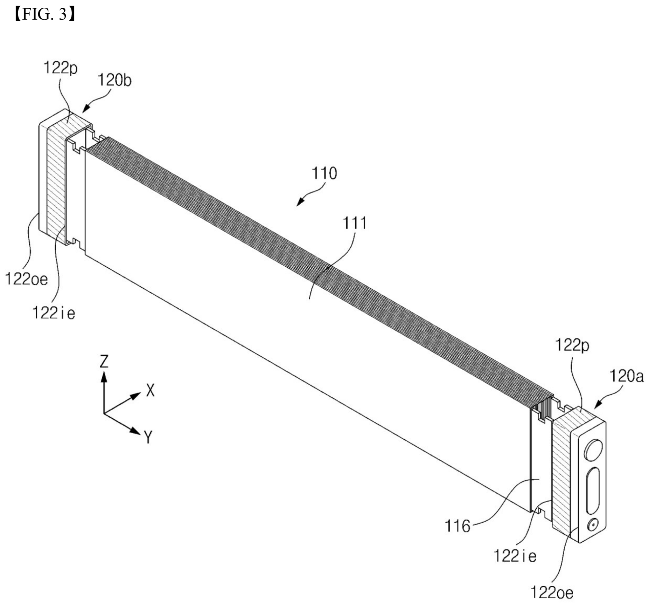

FIG. 1 is a perspective view of a part of a secondary battery according to an aspect of the present disclosure. FIG. 2 is a partial perspective view of an enlarged portion of the secondary battery of FIG. 1. FIG. 3 is a schematic perspective view illustrating the removal of a laminate sheet from the secondary battery of FIG. 1.

In the following drawings, the secondary battery 100 is shown in a vertical coordinate system defined by a first direction along the X-axis, a second direction along the Y-axis, and a third direction along the Z-axis, perpendicular to each other; however, the first direction, second direction, and third direction should be vertical relative to each other and are not particularly limited.

Referring to FIG. 1 to FIG. 3, the secondary battery 100 includes a stack-type electrode assembly 110, multifunctional terminal blocks (MTB) 120a, 120b, and a laminate sheet 130.

The stack-type electrode assembly 110 may include a plurality of unit batteries 111 stacked in a first direction (e.g., X-axis direction). Each of the unit batteries 111 may be an electrode material applied to a metal foil operating as a current collector.

Each of the unit batteries 111 may have a thin plate-shaped body extending in a second direction (e.g., Y-axis direction). Each of the unit batteries 111 may be a positive electrode unit battery or a negative electrode unit battery. In some aspects, the plurality of unit batteries 111 may be alternately stacked with one positive electrode unit cell and one negative electrode unit cell. The positive electrode unit battery and the negative electrode unit battery may be separated from each other by a separator.

In some other aspects, the plurality of unit batteries 111 may be a plurality of positive electrode unit batteries and a plurality of negative electrode unit batteries alternately stacked. The plurality of positive unit batteries and the plurality of negative unit batteries may be separated from each other by a separator.

The stack-type electrode assembly 110 may have electrode leads 116 at both ends (*e.g.,* two opposing ends) in the second direction (e.g., Y-axis direction). The electrode leads 116 may be electrically connected with electrode tabs having the plurality of unit batteries 111. One electrode lead 116 may have one or more electrode tabs connected thereto. In some aspects, two or more electrode tabs may be connected to the one electrode lead 116.

In some aspects, the stack-type electrode assembly 110 may have two electrode leads 116 on one side (*e.g.,* a first side of the assembly) and two electrode leads 116 on the other side (*e.g.,* a second side of the assembly opposite the first side). In this case, half of the plurality of unit batteries 111 included in the stack-type electrode assembly 110 may be coupled to the first electrode lead on one side (*e.g.,* the first side) and coupled to the second electrode lead on the other side (*e.g.,* the second side). Further, the other half of the plurality of unit batteries 111 included in the stack-type electrode assembly 110 may be coupled to the third electrode lead on one side *(e.g.,* the first side) and to the fourth electrode lead on the other side *(e.g.,* the second side). However, the present disclosure is not limited thereto.

In some aspects, the stack-type electrode assembly 110 may have one or three or more electrode leads on one side *(e.g.,* the first side). In some aspects, the stack-type electrode assembly 110 may have one or three or more electrode leads on the other side *(e.g.,* the second side).

A first MTB 120a may be provided at one side end *(e.g.,* a first end) in the second direction (e.g., Y-axis direction) of the stack-type electrode assembly 110 and a second MTB 120b may be provided at the other side end *(e.g.,* a second end opposite the first end). One of the first MTB 120a and the second MTB 120b may be electrically connected to a positive electrode side of the stack-type electrode assembly 110, and the other of the first MTB 120a and the second MTB 10b may be electrically connected to a negative electrode side of the stack-type electrode assembly (110). The second MTB 120b may have substantially the same configuration as the first MTB 120a, differing only in polarity. Hereinafter, the first MTB 120a will be described, a person skilled in the art will be able to understand the configuration of the second MTB 120b from this.

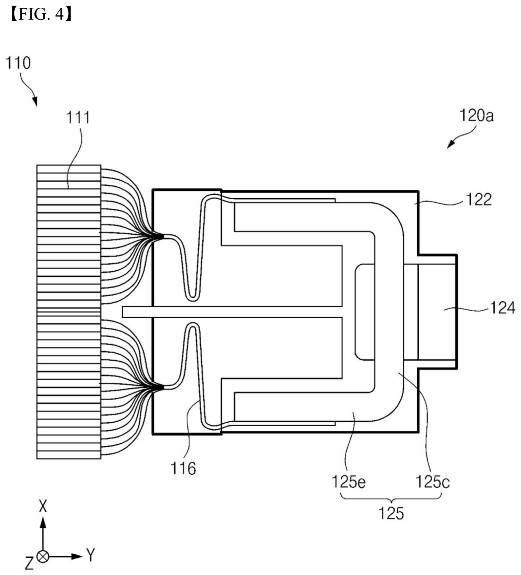

In some aspects, the first MTB 120a may include an MTB housing 122, an electrode terminal part 124 accommodated within the MTB housing 122, and a busbar 125 electrically connecting the electrode terminal part 124 and the electrode leads 116 (refer to FIG. 4).

The MTB housing 122 may be made of material having relatively high rigidity, such as metal, and defines the exterior of the first MTB 120a. In some aspects, the MTB housing 122 may be made of aluminum (Al), nickel (Ni), iron (Fe), cobalt (Co), chromium (Cr), manganese (Mn), or an alloy containing one or more among them.

The MTB housing 122 may include a through-hole 122h that exposes the electrode terminal part 124 described hereinafter. The through-hole 122h may be defined in the MTB housing 122 such that the electrode terminal part 124 is exposed towards the second direction (e.g., Y-axis direction). Thus, the through-hole 122h may be defined on a plane perpendicular to the second direction (e.g., Y-axis direction) of the MTB housing 122. In addition, the through-hole 122h may have an opening in the length direction of the electrode assembly 110. The shape of the through-hole 122h may be configured to conform to the outer peripheral shape of the portion of the electrode terminal part 124 exposed to the outside.

A person skilled in the art would understand that the first MTB 120a may further comprise, as needed, a through-hole for a rupture disk, a through-hole for a check valve, and a through-hole for an electrolyte inlet, etc. as described hereinafter.

The electrode terminal part 124 may be accommodated within the MTB housing 122 and may be exposed through the through-hole 122h. The electrode terminal part 124 may be made of a metal or metal alloy having low electrical resistance, such as copper (Cu), aluminum (Al), nickel (Ni), iron (Fe), platinum (Pt), manganese (Mn), or an alloy containing one or more among them.

In some aspects, the exposed surface of the electrode terminal part 124 that faces outward from the MTB housing 122 may be a plane. In some aspects, the exposed surface may have a plane extending perpendicular to the second direction (e.g., Y-axis direction).

In some aspects, an electrically insulating spacer may be provided between the electrode terminal part 124 and the MTB housing 122 such that the electrode terminal part 124 is electrically insulated from the MTB housing 122.

In some aspects, the first MTB 120a may include a rupture disk 126 configured to rupture in the event of an excessive increase in internal pressure (e.g., above a predetermined threshold pressure) of the secondary battery 100, thereby releasing gas that is the cause of the excessively increased internal pressure. The rupture disk 126 is not restored to its original state when ruptured due to a thermal event occurring within the interior of the secondary battery 100. The rupture disk 126 may be any rupture disk known in the art and is not particularly limited thereto.

In some aspects, the MTB housing 122 may further comprise a fused resin layer 122p on a side surface.

The fused resin layer 122p is a layer of a thermoplastic resin, and for example, may comprise at least one of a polyolefin-based resin, a polyester-based resin, a polyamide-based resin, a polyvinyl chloride, a polyvinylidene chloride, a polystyrene, a polyacrylonitrile, a polyurethane, a polycarbonate, a polyacetal, a polyacrylate, and a modified polyvinyl alcohol resin.

The polyolefin-based resin may be, for example, polyethylene, polypropylene, poly(1-butene), poly(4-methyl-1-pentene), ethylene-propylene copolymer, copolymer of ethylene with an α-olefin having a carbon number of 4 or more, copolymer of polyolefin with maleic anhydride, ethylene-vinyl ester copolymers, ethylene-acrylic acid ester copolymers, or modified polyolefins graft modified with unsaturated carboxylic acids or derivatives thereof, but the present disclosure is not limited thereto.

The polyester-based resin includes polyethylene terephthalate, polybutylene terephthalate, or polyethylene naphthalate, but the present disclosure is not limited thereto.

The polyamide-based resin includes nylon 6, nylon 6·6, nylon 6/66 copolymer, nylon 11, nylon 12, or poly(m-xylene adipamide), but the present disclosure is not limited thereto.

The fused resin layer 122p may be casted or may be uniaxially or biaxially stretched or rolled.

In some aspects, the fused resin layer 122p may at least partially coat a side surface of the MTB housing 122. In some aspects, the fused resin layer 122p may extend from an inner end 122ie of a side surface of the MTB housing 122 toward an outer end 122oe of a side surface (either the same or a different side surface) of the MTB housing 122. As used herein, inner end 122ie refers to an end adjacent to electrode lead 116. In some aspects, the fused resin layer 122p may surround a side surface of the MTB housing 122 having a predetermined width between the inner end 122ie and the outer end 122oe. In some aspects, the fused resin layer 122p may extend along a side surface of the MTB housing 122, having a predetermined width between the inner end 122ie and the outer end 122oe.

In some aspects, the fused resin layer 122p may surround a side surface of the MTB housing 122, having a predetermined width between the inner end 122ie and the outer end 122oe. In some aspects, the fused resin layer 122p may extend in a first direction (e.g., X-axis direction) and/or a third direction (e.g., Z-axis direction) while having a constant width between the inner end 122ie and the outer end 122oe.

In some aspects, the fused resin layer 122p may extend along a side surface of the MTB housing 122, having a constant width between the inner end 122ie and the outer end 122oe.

In some aspects, the fused resin layer 122p may coat the overall side surface of the MTB housing 122.

The fused resin layer 122p, for example, may have a thickness of from about 20 µm to about 400 µm. In some aspects, the fused resin layer 122p may have a thickness of about 20 µm to about 400 µm, about 30 µm to about 380 µm, about 40 µm to about 360 µm, about 50 µm to about 340 µm, about 60 µm to about 320 µm, about 70 µm to about 300 µm, about 80 µm to about 280 µm, about 90 µm to about 260 µm, about 100 µm to about 240 µm, about 110 µm to about 220 µm, about 120 µm to about 200 µm, about 130 µm to about 180 µm, about 140 µm to about 160 µm, or a range between any two of these figures.

If the thickness of the fused resin layer 122p is too thin, the mechanical strength may be insufficient. If the thickness of the fused resin layer 122p is too thick, it may be economically disadvantageous.

The fused resin layer 122p may be fused with the laminate sheet 130. In some aspects, the fused resin layer 122p may extend from an end 130e of the laminate sheet 130. In some aspects, the fused resin layer 122p may extend from the end 130e of the laminate sheet 130 toward the outer end 122oe.

In some aspects, the first MTB 120a may further comprise a check valve 128. The check valve 128 may be configured to open for gas release when the internal pressure of the secondary battery 100 becomes higher than a predetermined (e.g., a threshold) pressure, and to close again when the internal pressure is relieved by the release of the gas and, *e.g*., the internal pressure reaches or drops below the threshold or predetermined pressure. It is contemplated that the check valve 128 may lack a portion that is ruptured by the release of the gas and, instead, may be restored to its original state after the release of the gas inside.

In some aspects, the first MTB 120a may further comprise an electrolyte inlet 127 into which electrolyte may be injected. In some aspects, the electrolyte inlet 127 may be provided or included in any one of the first MTB 120a and the second MTB 120b.

The electrolyte injected through the electrolyte inlet 127 may be any electrolyte conventionally used for lithium secondary batteries and is not particularly limited thereto.

Within the first MTB 120a, a busbar may be further included. FIG. 4 is a schematic diagram illustrating a cross section of a first MTB 120a cut in a plane passing through the electrode terminal part 124 and perpendicular to a third direction (e.g., Z-axis direction).

Referring to FIG. 4, the busbar 125 may be included to form a surface contact with the electrode terminal part 124. The busbar 125 may be made of a metal material having a low electrical resistance. In some aspects, the busbar 125 may be made of copper (Cu), nickel (Ni), aluminum (Al), iron (Fe), cobalt (Co), platinum (Pt), molybdenum (Mo), tin (Sn), palladium (Pd), or an alloy comprising one or more among them.

The busbar 125 may be configured to form surface contact with the electrode leads 116 of the stack-type electrode assembly 110. In some aspects, the busbar 125 may be coupled to the electrode leads 116 by welding. In some aspects, the busbar 125 may be coupled with the electrode leads 116 by fasteners, such as rivets.

In some aspects, the busbar 125 may include a plane-shaped center part 125c extending horizontally in the first direction (e.g., X-axis direction) and an edge part 125e bending and extending from the center part 125c. The center part 125c may be configured to form a generally U-shaped cross-sectional form together with the edge part 125e and may extend in the third direction (e.g., Z-axis direction). In some aspects, the edge part 125e may have or define a plane extending perpendicular to the first direction (e.g., X-axis direction).

The busbar 125 may be in surface contact with the electrode terminal part 124 at the center part 125c. The busbar 125 may be in surface contact with the electrode leads 116 at the edge part 125e.

In some aspects, the electrode leads 116 may include a pre-bent portion that is bent at a portion that is not in contact with the busbar 125. The pre-bent portion may prevent stress from being concentrated in a specific portion of the electrode leads 116 by external forces applied to the stack-type electrode assembly 110, resulting in increased safety.

Because the secondary battery 100 of aspects of the present disclosure accommodates all of the units having respective functions within the MTB 120a, 120b, such as the electrode terminal part 124, the busbar 125, the rupture disk 126, the check valve 128, the electrolyte inlet 127, and the like, the battery cell itself has functions equivalent to a conventional battery module. The secondary battery 100 of aspects of the present disclosure can therefore have a high degree of freedom and compatibility and is advantageous for implementing cell-to-pack.

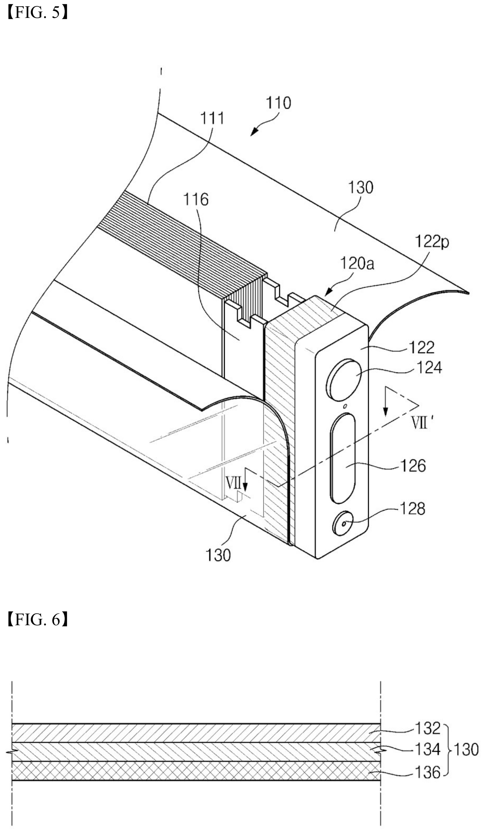

FIG. 5 is a partial exploded perspective view illustrating a coupling method of laminate sheets of a secondary battery according to an aspect of the present disclosure. FIG. 6 is a partial cross-sectional view of a laminate sheet according to an aspect of the present disclosure.

Referring to FIG. 5 and FIG. 6, the laminate sheet 130 may be configured to wrap around a side surface of the stack-type electrode assembly 110. In some aspects, the laminate sheet 130 may be attached or coupled to the side surfaces of the MTB 120a, 120b such that the laminate sheet 130 is at least partially coating the side surfaces of the MTB 120a, 120b. In some aspects, the laminate sheet 130 may provide overall coating of side surfaces parallel to the second direction (e.g., Y-axis direction) of the MTB 120a, 120b (*e.g.*, coating an entirety of such side surfaces). In some other aspects, the laminate sheet 130 may coat only a portion of the side surfaces parallel to the second direction (e.g., Y-axis direction) of the MTB 120a, 120b.

The laminate sheet 130 may include a metal layer 134 having flexibility, an inner resin layer 132 included on one side (*e.g.,* a first side) of the metal layer 134, and an outer resin layer 136 included on the other side of the metal layer 134 (*e.g.,* a second side opposite the first side).

The metal layer 134 may maintain an appropriate thickness, prevent water vapor, oxygen, and other gases from penetrating from the outside to the inside, and prevent electrolyte leakage. In some aspects, the metal layer 134 may include, any one or more selected among iron (Fe), carbon (C), chromium (Cr), manganese (Mn), nickel (Ni), aluminum (Al), and alloys thereof, but is not limited thereto. When the metal layer 134 is made of an iron-containing material, mechanical strength is enhanced, and when the metal layer 134 is made of an aluminum material, flexibility is improved, thereby conventionally aluminum metal foil is mainly used.

The metal layer 134 may be configured to have an appropriate thickness and mechanical strength such that it can be deformed comparatively easily by external forces and does not develop cracks or holes even after repeated deformation.

In some aspects, the metal layer 134 may have a thickness of from about 20 micrometers (µm) to about 100 µm. In some aspects, the metal layer 134 may have a thickness of about 20 micrometers (µm) to about 100 µm, about 25 µm to about 95 µm, about 30 µm to about 90 µm, about 35 µm to about 85 µm, about 40 µm to about 80 µm, about 45 µm to about 75 µm, about 50 µm to about 70 µm, about 55 µm to about 60 µm, or a range between any two of these figures.

The inner resin layer 132 provided on one side (*e.g.,* the first side) of the metal layer 134 may include a thermal adhesive layer. In some aspects, the inner resin layer 132 may comprise a polyolefin-based material capable of performing a sealing action through fusion. In some aspects, the inner resin layer 132 may comprise a modified propylene, such as casted polypropylene (CPP), or a polypropylene-butylene-ethylene terpolymer.

The inner resin layer 132 may be formed by coating or laminating one side of the metal layer 134.

The outer resin layer 136 provided on the other side of the metal layer 134 (*e.g.,* the second side) may serve as a base substrate and a protective layer for forming the laminate sheet 130. The outer resin layer 136 may comprise an insulating material such as polyethylene terephthalate (PET) or nylon, etc.

In some aspects, the inner resin layer 132 and the outer resin layer 136 may each have a thickness of from about 10 micrometers (µm) to about 50 µm. In some aspects, each of the inner resin layer 132 and the outer resin layer 136 may have a thickness of about 10 micrometers (µm) to about 50 µm, about 12 µm to about 48 µm, about 15 µm to about 45 µm, about 17 µm to about 43 µm, about 20 µm to about 40 µm, about 22 µm to about 38 µm, about 25 µm to about 35 µm, about 27 µm to about 33 µm, or a range between any two of these figures.

In some aspects, an adhesive resin layer may be further included between the inner resin layer 132 and the metal layer 134 and/or between the outer resin layer 136 and the metal layer 134. The adhesive resin layer may be included for smooth attachment between different types of materials. The adhesive resin layer may be formed as a single layer or as a multilayer. In some aspects, the adhesive resin layer may comprise a polyolefin-based resin, a polyurethane-based resin, an epoxy-based resin, or a mixture thereof.

In some aspects, the inner resin layer 132 may be fused to the fused resin layer 122p included on the side surfaces of the MTB 120a, 120b at both ends (e.g., two opposing ends) in the second direction (e.g., Y-axis direction). By the inner resin layer 132 fused to the fused resin layer 122p while surrounding the side surfaces of the MTB 120a, 120b, the stack-type electrode assembly 110 may be enclosed within the secondary battery. The inner resin layer 132 may be fused to the side surfaces of the MTB 120a, 120b by being melted and then cooled by heating while in contact with the fused resin layer 122p on the side surfaces of the MTB 120a, 120b.

The laminate sheet 130 that surrounds the side surfaces of the MTB 120a, 120b and the stack-type electrode assembly 110 may be adhered to and fused to the inner resin layers 132 that face each other at the combination part 130m.

The combination part 130m may be located on any one side of the stack-type electrode assembly 110. In some aspects, the combination part 130m may be located in a third direction (e.g., Z-axis direction) of the stack-type electrode assembly 110 after surrounding the stack-type electrode assembly 110.

As described above, in the secondary battery 100 of aspects of the present disclosure, unit batteries can be accommodated above the thickness defined by a conventional forming process for the laminate sheet 130 because the laminate sheet 130 directly surrounds the stack-type electrode assembly 110 without the forming process for the laminate sheet 130. Thus, the secondary battery 100 of aspects of the present disclosure is advantageous for realizing large capacity cells.

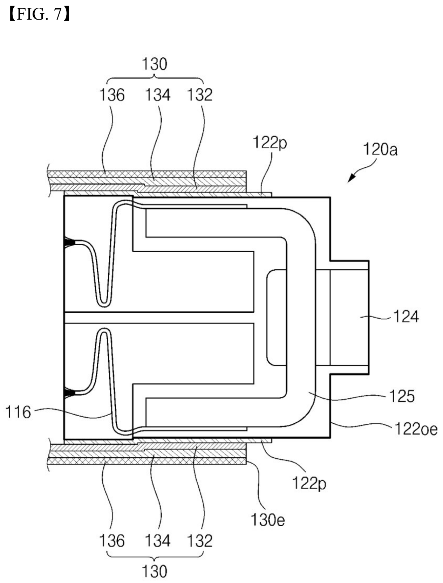

FIG. 7 is a cross-sectional view illustrating a part of a cross section of a first MTB 120a and a laminate sheet 130 cut along the lines VII-VII' of FIG. 5 according to an aspect of the present disclosure.

Referring to FIG. 7, the laminate sheet 130 may be fused with the fused resin layer 122p. More specifically, an inner resin layer 132 of the laminate sheet 130 may be fused with the fused resin layer 122p.

In FIG. 7, an interface is shown to exist between the inner resin layer 132 and the fused resin layer 122p, but this is for ease of understanding and an interface may not be identified between the inner resin layer 132 and the fused resin layer 122p in practice.

As shown in FIG. 7, the fused resin layer 122p may extend generally from an end 130e of the laminate sheet 130 toward an outer end 122oe of a side surface of the MTB housing 122. In some aspects, the end 130e of the laminate sheet 130 may extend further toward the outer end 122oe than the end of the fused resin layer 122p.

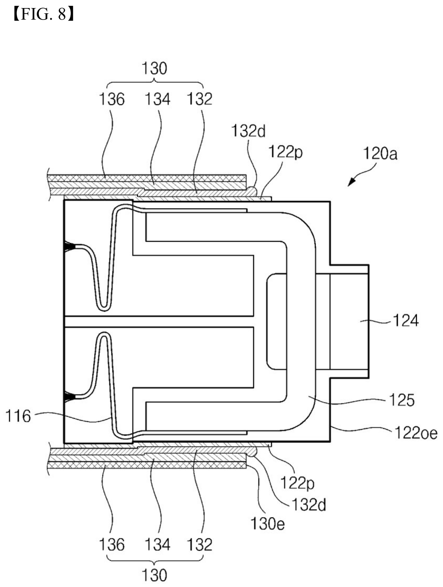

FIG. 8 is a cross-sectional view illustrating a part of a section in which a first MTB 120a and a laminate sheet 130 cut along the lines VII-VII' of FIG. 5 according to another aspect of the present disclosure. The aspect shown in FIG. 8 is substantially the same as the aspect shown in FIG. 7, except that a melted protrusion part 132d is further formed at an end 130e of the laminate sheet 130. Accordingly, hereinafter will be described with a focus on such difference.

Referring to FIG. 8, the inner resin layer 132 may further comprise a melted protrusion part 132d at the end 130e of the laminate sheet 130. The melted protrusion part 132d may be a structure formed when the inner resin layer 132 is melted to fuse to the fused resin layer 122p, as a result of the melted inner resin layer 132 partially flowing to the outside of the end 130e of the laminate sheet 130 and then solidifying. In some aspects, the melted protrusion part 132d may be formed by flowing of the inner resin layer 132 to the outside by the pressure applied to the laminate sheet 130 for fusion of the laminate sheet 130.

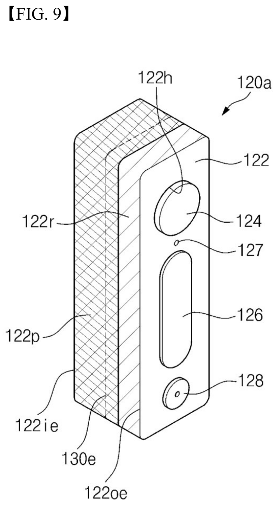

FIG. 9 is a schematic diagram illustrating important part of an outer side surface of a first MTB 120a according to an aspect of the present disclosure. A person skilled in the art will understand that the configuration of the first MTB 120a described with reference to FIG. 9 may be equally applicable to the second MTB 120b.

Referring to FIG. 9, the outer side surface of the MTB housing 122 of the first MTB 120a may be at least partially roughened.

In some aspects, the roughening may be performed by surface etching. In some aspects, the surface etching may be performed by wet etching or dry etching. In some aspects, the surface etching may be performed chemically using a liquid etchant. In some aspects, the surface etching may be performed by irradiation of plasma, laser, radicals, and/or ions.

As shown in FIG. 9, a roughened surface 122r may be formed across the overall outer side surface (*e.g.,* an entirety of the side surface) of the MTB housing 122. The MTB housing 122 may include the roughened surface 122r across the overall upper surface, lower surface, left side surface, and right side surface of the MTB housing 122 shown in FIG. 9.

The roughened surface 122r may have a roughness of from about 0.1 µm to about 50 µm based on an arithmetic average roughness (Ra). In some aspects, the roughened surface 122r may have a roughness of about 0.1 µm to about 50 µm, about 0.3 µm to about 48 µm, about 0.5 µm to about 45 µm, about 0.8 µm to about 43 µm, about 1 µm to about 40 µm, about 1.3 µm to about 38 µm, about 1.5 µm to about 35 µm, about 1.8 µm to about 33 µm, about 2 µm to about 30 µm, about 2.5 µm to about 28 µm, about 3 µm to about 25 µm, about 3.5 µm to about 23 µm, about 4 µm to about 20 µm, about 5 µm to about 18 µm, about 6 µm to about 15 µm, about 7 µm to about 13 µm, about 8 µm to about 10 µm, or a range between any two of these figures.

The roughened surface 122r may improve the adhesion of the fused resin layer 122p and the the MTB housing 122. If the roughness of the roughened surface 122r is too small, the effect of improving the adhesion of the fused resin layer 122p and the MTB housing 122 may be insufficient. If the roughness of the roughened surface 122r is too large, the MTB housing 122 may damage other parts that are rubbed thereon.

The roughened surface 122r may be at least partially coated by the fused resin layer 122p. In some aspects, the fused resin layer 122p may overlap only a portion of the roughened surface 122r. The fused resin layer 122p may extend from an inner end 122ie of a side surface of the MTB housing 122 towards an outer end 122oe. In some aspects, the fused resin layer 122p may not extend to the outer end 122oe. However, the fused resin layer 122p may extend from the end 130e of the laminate sheet further toward the outer end 122oe.

In the aspect described with reference to FIG. 9, the overall side surface of the MTB housing 122 may be roughened and the fused resin layer 122p may be formed only on the necessary portion thereof. Thus, the workability for forming the fused resin layer 122p is excellent.

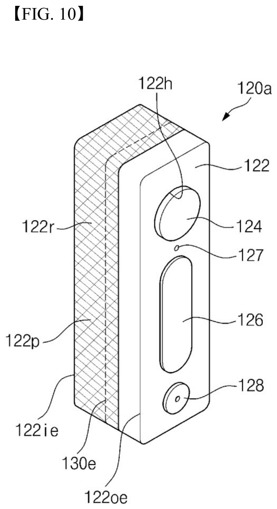

FIG. 10 is a schematic diagram illustrating important part of an outer side surface of a first MTB 120a according to another aspect of the present disclosure. A person skilled in the art will understand that the configuration of the first MTB 120a described with reference to FIG. 10 may be equally applicable to the second MTB 120b.

Referring to FIG. 10, an outer side surface of the MTB housing 122 of the first MTB 120a may be partially roughened.

As shown in FIG. 10, a roughened surface 122r may be formed across a portion or an entirety of the outer side surface of the MTB housing 122. The MTB housing 122 may include the roughened surface 122r across a predetermined width from the inner end 122ie toward the outer end 122oe of the upper surface, lower surface, left side surface, and right side surface of the MTB housing 122 shown in FIG. 10.

In some aspects, the fused resin layer 122p may overlap the overall width of the roughened surface 122r. In some aspects, the side surface of the MTB housing 122 coated by the fused resin layer 122p may be substantially corresponding to the roughened surface 122r. In other words, on the upper surface, lower surface, left side surface, and right side surface of the MTB housing 122, the area occupied by the fused resin layer 122p, and the area occupied by the roughened surface 122r may be substantially the same.

In the aspect described with reference to FIG. 10, productivity may be improved because roughening is performed on only a necessary portion among the side surfaces of the MTB housing 122.

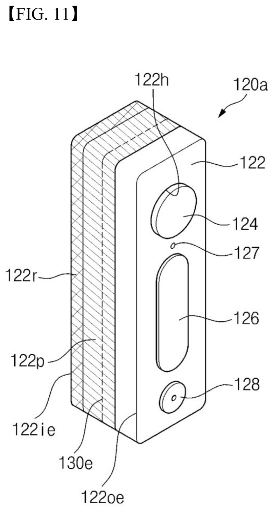

FIG. 11 is a schematic diagram illustrating a part of an outer side surface of a first MTB 120a according to another aspect of the present disclosure. A person skilled in the art will understand that the configuration of the first MTB 120a described with reference to FIG. 11 may be equally applicable to the second MTB 120b.

Referring to FIG. 11, an outer side surface of the MTB housing 122 of the first MTB 120a may be partially roughened.

As shown in FIG. 11, a roughened surface 122r may be formed across a portion or an entirety of the outer side surface of the MTB housing 122. The MTB housing 122 may include a roughened surface 122r across a predetermined width from an inner end 122ie toward an outer end 122oe of the upper surface, lower surface, left side surface, and right side surface of the MTB housing 122 shown in FIG. 10.

In some aspects, the fused resin layer 122p may overlap the overall of (*e.g.,* an entirety of) the roughened surface 122r. In addition, the fused resin layer 122p may pass through the roughened surface 122r to contact a side surface of the MTB housing 122 that is not roughened.

In the aspects of FIG. 9 to FIG. 11, the inner end of the roughened surface 122r is shown to be correspond with an inner end 122ie of a side surface of the MTB housing 122, but the present disclosure is not limited thereto. In some aspects, an unroughened portion may be interposed between the inner end of the roughened surface 122r and the inner end 122ie of the side surface of the MTB housing 122 to protect other portions of the MTB housing 122 when forming the roughened surface 122r.

In the aspects of FIG. 9 to FIG. 11, the inner ends of the fused resin layer 122p are all shown as correspond with the inner ends 122ie of the side surfaces of the MTB housing 122, but the present disclosure is not limited thereto. In some aspects, the fused resin layer 122p may be formed such that the inner ends of the fused resin layer 122p are spaced apart from the inner ends 122ie of the side surfaces of the MTB housing 122 at predetermined intervals, considering operation errors in the process.

In the aspects of FIG. 9 to FIG. 11, both inner ends of the fused resin layer 122p are shown as corresponding with the inner ends of the roughened surface 122r, but the present disclosure is not limited thereto. In some aspects, the inner end of the fused resin layer 122p may be located between the inner end 122ie of the side surface of the MTB housing 122 and the inner end of the roughened surface 122r. In some other aspects, an inner end of the roughened surface 122r may be located between an inner end 122ie of the side surface of the MTB housing 122 and an inner end of the fused resin layer 122p.

### (Second aspect)

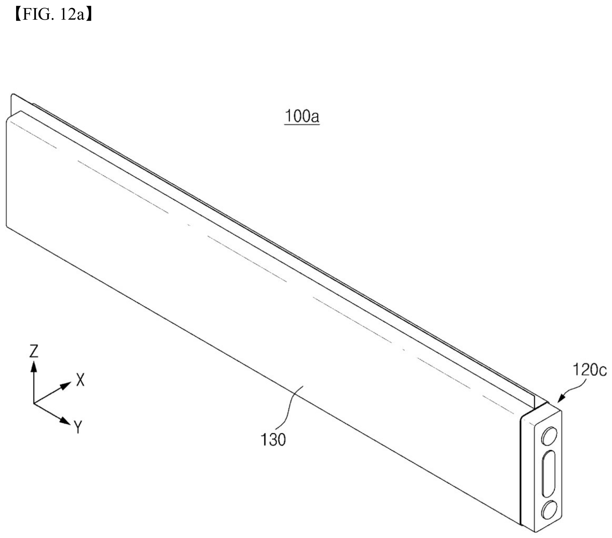

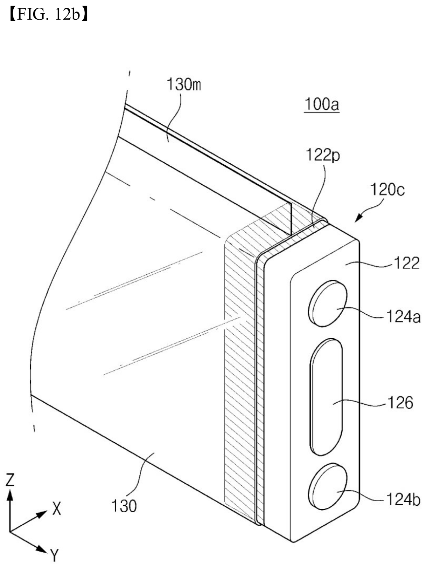

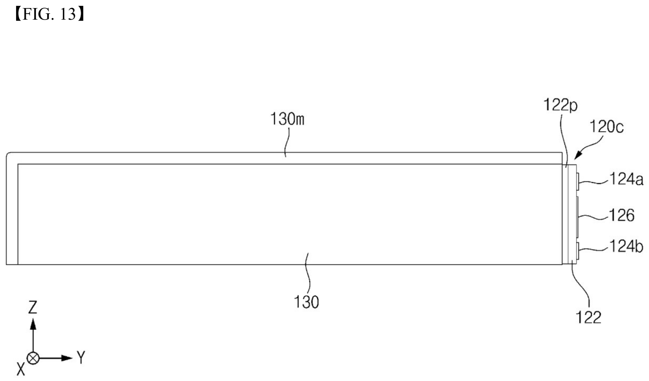

FIG. 12a is a perspective view illustrating a part of a secondary battery according to another aspect of the present disclosure. FIG. 12b is a partial perspective view illustrating an enlarged portion of the secondary battery of FIG. 12a. FIG. 13 is a side view of a secondary battery according to another aspect of the present disclosure.

The secondary battery 100a differs from the aspects described with reference to FIGS. 1 to 11 in that MTB is provided on only one side (*e.g.,* a first side) of the stack-type electrode assembly extending in the second direction (e.g., Y-axis direction). Accordingly, hereinafter will be described with a focus on such difference, and further description will be omitted regarding overlapping parts.

Referring to FIGS. 12a to 13, because the MTB 120c is provided only on one side (*e.g.,* the first side) of the stack-type electrode assembly and not on both sides (*e.g.,* two opposing sides) of the stack-type electrode assembly, both electrodes of the stack-type electrode assembly are connected to the MTB 120c. In other words, the MTB 120c is included only on one side (*e.g.,* the first side) of the second direction (e.g., Y-axis direction) of the stack-type electrode assembly, and the other side (*e.g.,* a second side) of the second direction (e.g., Y-axis direction) of the stack-type electrode assembly may extend the combination part 130m without the MTB.

Since the MTB is provided on only one side (*e.g.,* the first side) of the stack-type electrode assembly, the MTB 120c is included with a first electrode terminal part 124a and a second electrode terminal part 124b of different polarities. One of the first electrode terminal part 124a and the second electrode terminal part 124b may be a terminal part corresponding to a cathode and the other may be a terminal part corresponding to an anode.

In FIG. 6b, a rupture disk 126 is shown as included between the first electrode terminal part 124a and the second electrode terminal part 124b, but the relative positions of the first electrode terminal part 124a, the second electrode terminal part 124b, and the rupture disk 126 within the MTB 120c are not particularly limited.

The combination part 130m of the laminate sheet 130 may extend from either side surface (in FIG. 13, the side surface of the upper portion) of the third direction (e.g., Z-axis direction) of the stack-type electrode assembly to the second direction (e.g., Y-axis direction). In addition, the combination part 130m may extend in the third direction (e.g., Z-axis direction) from the other side. In FIG. 13, the stack-type electrode assembly is surrounded by the laminate sheet 130.

As above, although aspects of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of aspects of the present disclosure will not depart from the technology of the present disclosure.

## Claims

1. A secondary battery comprising:
an electrode assembly comprising a plurality of unit batteries stacked in a first direction and having electrode leads on opposing ends in a second direction perpendicular to the first direction;
a multifunctional terminal block (MTB) included on the opposing ends of the electrode assembly; and
a laminate sheet coupled to a side surface of the electrode assembly,
wherein the MTB comprises a fused resin layer on a side surface thereof.

2. The secondary battery of claim 1, wherein the laminate sheet overlaps at least partially with the side surface of the MTB, and
the laminate sheet is fused with the fused resin layer.

3. The secondary battery of claim 2, wherein the laminate sheet comprises:
a metal layer having flexibility;
an inner resin layer included on a first side of the metal layer; and
an outer resin layer included on a second side of the metal layer,
wherein the inner resin layer comprises casted polypropylene (CPP).

4. The secondary battery of claim 3, wherein the fused resin layer is fused to the inner resin layer.

5. The secondary battery of claim 3, wherein the fused resin layer comprises a polypropylene resin.

6. The secondary battery of claim 3, wherein the fused resin layer comprises an extension part extending from an end of the laminate sheet along the side surface of the MTB.

7. The secondary battery of claim 3, wherein the side surface of the MTB is at least partially roughened.

8. The secondary battery of claim 7, wherein the fused resin layer coats a roughened portion of the MTB.

9. The secondary battery of claim 7, wherein the side surface of the MTB is roughened by surface etching.

10. The secondary battery of claim 1, wherein the MTB comprises:
an electrode terminal part electrically connected to the electrode leads of the electrode assembly; and
a rupture disk configured to rupture when the internal pressure reaches a threshold pressure to release gas.

11. The secondary battery of claim 1, wherein the MTB further comprises a busbar electrically connecting the electrode leads of the electrode assembly with the electrode terminal part.

12. A secondary battery comprising:
an electrode assembly comprising a plurality of unit batteries stacked in a first direction and having electrode leads on an end extending in a second direction perpendicular to the first direction;
a multifunctional terminal block (MTB) coupled to the electrode leads of the electrode assembly and comprising an electrode terminal part and a busbar; and
a laminate sheet coupled to the electrode assembly with the MTB,
wherein a side surface of the MTB is roughened.

13. The secondary battery of claim 12, wherein the roughened side surface of the MTB is at least partially coated by a fused resin layer.

14. The secondary battery of claim 13, wherein the laminate sheet comprises:
a metal layer having flexibility;
an inner resin layer included on a first side of the metal layer; and
an outer resin layer included on a second side of the metal layer,
wherein the outer resin layer is fused with the fused resin layer.

15. The secondary battery of claim 13, wherein the fused resin layer comprises an extension part extending from an end of the laminate sheet along the side surface of the MTB.
